# EUROPÄISCHE PATENTANMELDUNG

(11) **EP 3 661 191 A1**
(43) Veröffentlichungstag der Anmeldung: **03.06.2020**
(21) Anmeldenummer: 18208542.3
(22) Anmeldetag: 27.11.2018
(51) Int. Cl.: H04N 5/345, H04N 5/369

(54) **VERFAHREN ZUM AUSLESEN EINES FLÄCHENSENSORS**

(71) Anmelder: B&R Industrial Automation GmbH, 5142 Eggelsberg (AT)
(72) Erfinder: Walkner, Walter, 5114 Göming (AT); Beinhundner, Gerhard, 5233 Pischelsdorf (AT); Waldl, Andreas, 5142 Eggelsberg (AT)
(74) Vertreter: Patentanwälte Pinter & Weiss OG

(57) **Zusammenfassung**

Bildaufnahmeeinheit (2) und Verfahren zum Auslesen eines Flächensensors (1) in der Bildaufnahmeeinheit (2). Die Bildaufnahmeeinheit (2) weist eine Optik (3) auf, mit welcher die Bildaufnahmeeinheit (2) auf Objekte (4) fokussierbar ist. Der Flächensensor (1) weist eine Vielzahl an Sensorzeilen (5) auf, wobei jede Sensorzeile (5) eine Vielzahl an vorzugsweise linear angeordneten, vorzugsweise einzeln auslesbaren Pixelelementen (6) umfasst. Es wird ein Pixelbereich (7) definiert, wobei der Pixelbereich (7) zumindest einen Teilabschnitt einer Sensorzeile (5) umfasst. Das Auslesen des Flächensensors (1) ist auf die Pixelelemente (6) in dem Pixelbereich (7) eingeschränkt.

## Beschreibung

Die gegenständliche Erfindung betrifft ein Verfahren zum Auslesen eines Flächensensors in einer Bildaufnahmeeinheit, wobei die Bildaufnahmeeinheit eine Optik aufweist, mit welcher die Bildaufnahmeeinheit auf Objekte fokussierbar ist, wobei der Flächensensor eine Vielzahl an Sensorzeilen aufweist und wobei jede Sensorzeile eine Vielzahl an vorzugsweise linear angeordneten, vorzugsweise einzeln auslesbaren Pixelelementen umfasst. Weiters betrifft die Erfindung eine Bildaufnahmeeinheit mit zumindest einem Flächensensor, wobei der Flächensensor eine Vielzahl an Sensorzeilen aufweist und wobei jede Sensorzeile eine Vielzahl an vorzugsweise linear angeordneten, vorzugsweise einzeln auslesbaren Pixelelementen umfasst, einer Optik, mit welcher die Bildaufnahmeeinheit auf Objekte fokussierbar ist, und eine Steuereinheit, über welche die von den Pixelelementen des Flächensensors aufgenommenen Werte ausgelesen werden.

Zahlreiche Industrieanwendungen erfordern die Verwendung komplexer optischer Sensorlösungen, wobei insbesondere die Implementierung von Machine-Vision-Systemen mit einem großen technischen Aufwand verbunden ist. Andererseits wird versucht, die von den Sensoren zur zentralen Steuerung übertragene Datenmenge, aber auch die vom Sensor selbst verarbeitete Datenmenge, zu reduzieren, um die Übertragungs- und Rechenkapazitäten bestehender Systeme nicht zu überlasten. Daher gibt am Markt eine Vielzahl von Anwendungen, für die Zeilensensoren bevorzugt verwendet werden. Soll beispielsweise die Mantelfläche eines Zylinders aufgenommen werden, so kann dieser, bei bekannter Winkelposition oder Drehgeschwindigkeit, Zeile für Zeile abgetastet werden, bis ein Gesamtbild der Mantelfläche erhalten wurde. Aber auch bei Linearbewegungen, etwa auf einem Förderband, kann ein Zeilensensor von Vorteil sein, wenn beispielsweise Objekte über eine streifenartig vorgesehene Hintergrundbeleuchtung transportiert werden. Die Auslösung des Zeilensensors erfolgt dabei über einen Geber. Die Verwendung von Zeilensensoren ist jedoch einigermaßen unflexibel und es sind am Markt keine Zeilensensoren verfügbar, die integriert in ein zentrale Steuerung oder ein Antriebssystem angesteuert werden können, etwa um mit der Bewegung von Objekten synchronisiert zu werden. Daher müssen beispielsweise externer Taktgeber zur Triggerung verwendet werden.

Um mit einem Zeilensensor Strukturen auf einer Fläche aufzunehmen, wird üblicherweise eine Dunkelfeldbeleuchtung verwendet (gegebenenfalls kommen aber auch Hellfeldbeleuchtungen zum Einsatz). Das Dunkelfeld kann beispielsweise dadurch erreicht werden, dass der Sensor im Wesentlichen oder ungefähr senkrecht auf die aufzunehmende Objektoberfläche ausgerichtet wird und eine Beleuchtung so angeordnet wird, dass die Objektoberfläche in einem idealen flachen Winkel beleuchtet wird. Andererseits kann auch die Beleuchtung die Objektoberfläche im Wesentlichen senkrecht beleuchten, wobei die Kamera in einem flachen Winkel auf die Objektoberfläche ausgerichtet wird. Abgestimmt auf den jeweiligen Anwendungsfall kann auch jede Position dazwischen geeignet sein.

Der Winkel zwischen Beleuchtung und Kamera ist besonders wichtig, wenn es gilt, Erhöhungen und Vertiefungen auf geraden oder gewölbten Oberflächen, also beispielsweise Kratzer, Sprünge, Material-, Produktions- und/oder Darstellungsfehler, zu finden. Dabei stellt sich das Problem, dass der optimale Winkel Manuell ermittelt und eingestellt werden muss. Dieser Vorgang ist einerseits arbeitsaufwändig, andererseits schwer zur reproduzieren und auch Fehleranfällig.

DE 10 2009 006 112 A1 offenbart ein Verfahren und eine Vorrichtung zum Prüfen von Lumineszenzfarbmuster tragenden Gegenständen, insbesondere Banknoten. Die Gegenstände werden mit zumindest einer die Lumineszenz der Lumineszenzfarbmuster anregenden Strahlung beleuchtet und in Folge an einem Strahlungssensor vorbeibewegt, mit dem die Lumineszenzstrahlung aufgenommen untersucht und ausgewertet wird. Die abgegebene Lumineszenzstrahlung wird mit einem Flächensensor aufgenommen, wobei die einzelnen Zeilen des Flächensensors in rascher Aufeinanderfolge getrennt voneinander ausgelesen werden. Aus den Signalwerten der in vorgegebenen zeitlichen Abständen belichteten Pixel und/oder Zeilen wird eine Werte- bzw. Messkurve der Intensitätswerte der angeregten Lumineszenzstrahlung der Lumineszenzfarbmuster erstellt.

EP 2903264 A1 offenbart ein Verfahren zur Ermittlung eines Lichtfeldes eines Gegenstandes mittels einer einen Flächensensor aufweisenden Bildaufnahmeeinheit. Der Gegenstand wird auf einer zur Bildaufnahmeeinheit mit einem vorgegebenen Abstand beabstandet liegenden Gegenstandsebene relativ zur Bildaufnahmeeinheit durch den Aufnahmebereich bewegt, wobei mehrere Einzelzeilenbilder einer bestimmten Objektzeile zu unterschiedlichen Zeitpunkten aufgenommen werden und der Winkel zur Oberflächennormale für die Einzelzeilenbilder jeweils unterschiedlich ist. Aus den Daten der Einzelzeilenbilder wird eine Lichtfeld-Datenstruktur erstellt.

Die gegenständliche Erfindung verfolgt unter anderem das Ziel, die Sensorlösungen des Standes der Technik hinsichtlich einer höheren Flexibilität und einer einfacheren Anwendung zu verbessern.

Erfindungsgemäß werden diese und andere Aufgaben der Erfindung durch ein Verfahren der eingangs genannten Art gelöst, bei dem ein Pixelbereich definiert wird, wobei der Pixelbereich zumindest einen Teilabschnitt einer Sensorzeile umfasst und wobei das Auslesen des Flächensensors auf die Pixelelemente in dem Pixelbereich eingeschränkt wird. Durch diese Einschränkung lassen sich Flächensensoren flexibel als unterschiedliche Sensoreinheiten konfigurieren, wobei die Einschränkung auf die Pixelbereiche auch eine höhere Aufnahmerate ermöglicht, da nur ein Teilbereich des Flächensensors ausgelesen werden muss, was die Menge der zu handhabenden Daten verringert. Der Pixelbereich kann vorzugsweise jede beliebige Untermenge aus der Gesamtheit der Pixelelemente des Flächensensors umfassen. Gegebenenfalls kann die Gesamtheit der Pixelelemente des Flächensensors in Untergruppen eingeteilt sein (z.B. definierte, zum Beispiel ganzzahlig geteilte Teile von Sensorzeilen, insbesondere ganze oder halbe oder Viertel-Sensorzeilen), wobei der Pixelbereich jede beliebige Untermenge aus der Gesamtheit der Untergruppen des Flächensensors umfassen kann.

Als "Flächensensor" werden im Zusammenhang mit der gegenständlichen Offenbarung eine beliebige Vorrichtung zur Aufnahme von zweidimensionalen, auf Pixeldarstellungen basierenden Abbildern aus Licht auf elektrischem Wege bezeichnet. Zu Beispielen von Flächensensoren zählen daher insbesondere Bildsensoren, bei welchen bestimmte Untergruppen von Pixelelementen gleichzeitig auslesbar sind, wie etwa CCD-Sensoren, und Bildsensoren, bei denen jedes Pixelelement einzeln auslesbar ist, wie etwa CMOS-Bildsensoren.

Als "Licht" wird im Zusammenhang mit der gegenständlichen Offenbarung jegliche elektromagnetische Strahlung im für den Menschen sichtbaren und im unsichtbaren Bereich bezeichnet, welches mit entsprechenden Flächensensoren messbar ist. Zum Licht zählen daher insbesondere elektromagnetische Strahlung im sichtbaren Spektrum, im Infrarotbereich, im UV-Bereich und im Röntgenbereich.

In vorteilhafter Weise kann der Pixelbereich zumindest eine Sensorzeile vollständig umfassen. Dadurch lassen sich mit einem einzigen Flächensensor eine Vielzahl an Linearsensoren nutzbar machen, die jeweils einen bestimmten linearen Aufnahmebereich abdecken und einen bestimmten Einstrahlungswinkel aufweisen. Zusätzlich wird die Parametrisierung vereinfacht.

In einer vorteilhaften Ausführungsform kann die Definition des Pixelbereichs auf Basis zumindest einer von der Bildaufnahmeeinheit zuvor erstellten Aufnahme definiert werden. Dies ermöglicht beispielsweise eine weitgehend autonome Anpassung des gewählten Pixelbereichs an die gerade vorherrschenden Begebenheiten.

In einer weiteren vorteilhaften Ausführungsform kann die Definition des Pixelbereichs auf Basis einer vorgegebenen Parametrisierung erfolgen. Dies ermöglicht beispielsweise die Integration der Bildaufnahmeeinheit in ein Automatisierungssystem, welches die Parameter für die Parametrisierung bereitstellt.

In vorteilhafter Weise kann der Pixelbereich eine zusammenhängende Teilfläche des Flächensensors umfassen oder der Pixelbereich kann zwei oder mehr gegebenenfalls voneinander räumlich getrennte Pixelteilbereiche aufweisen. Dadurch lässt sich die Bildaufnahmeeinheit als ein einzelner oder als Gruppe von mehreren Sensoren, beispielsweise als Gruppe mehrerer in unterschiedliche Richtungen ausgerichteter Linearsensoren, verwenden.

In einer weitern vorteilhaften Ausgestaltung der Erfindung kann die Definition des Pixelbereichs auf die gegebenenfalls bewegte Position zumindest eines Objekts abgestimmt werden. Die Information über die Position des Objekts kann beispielsweise von externen oder integrierten Sensoren erfasst, von der Bildaufnahmeeinheit selbst erfasst oder von einem zentralen Steuergerät übermittelt werden. Das Auslesen des Pixelbereichs kann beispielsweise synchron zu einer definierten Objektposition erfolgen.

In einer weiteren vorteilhaften Ausführungsform kann vorgesehen sein, dass die Definition des Pixelbereichs dynamisch verändert wird. Dadurch lässt sich eine "bewegte Sensorposition" realisieren, ohne dass sich die Position der Bildaufnahmeeinheit verändert werden muss. Gegebenenfalls können bewegte Objekte von dem Pixelbereich "verfolgt" werden, wobei entweder der Bildbereich, auf den der Pixelbereich ausgerichtet ist mit einer fixen Oberflächenposition auf dem Objekt mitbewegt wird, oder der Bildbereich eine Oberfläche des (bewegten oder stillstehenden) Objekts "überstreicht" um die Oberfläche des Objekts zu scannen und gegebenenfalls eine entsprechende Aufnahme zu erstellen.

Der Begriff "dynamisch", so wie er hierin verwendet wird, bedeutet in dem Zusammenhang, dass sich die Definition des Pixelbereichs innerhalb einer bestimmten Messaufgabe verändert. Die Messaufgabe kann dabei durch den Beginn und das Ende der Aufzeichnung von durchgängigen und zusammengehörigen Messdaten definiert sein.

In einer weiteren vorteilhaften Ausgestaltung der Erfindung kann die Definition des Pixelbereichs zur Erfassung einer Oberfläche eines gegebenenfalls bewegten Objekts dynamisch verändert werden. Dadurch ist es beispielsweise möglich, die Oberflächen von Objekten in einer Förderanlage auf Produktionsfehler zu scannen, ohne dass das Objekt dabei in eine spezielle Position gebracht, oder auch nur angehalten werden muss.

In einem weiteren Aspekt wird die Aufgabe der gegenständlichen Erfindung durch eine Bildaufnahmeeinheit der eingangs genannten Art gelöst, bei der mit der Steuereinheit ein zumindest eine Teilfläche des Flächensensors umfassender Pixelbereich definierbar ist, wobei der Pixelbereich zumindest einen Teilabschnitt einer Sensorzeile umfasst, und wobei das Auslesen des Flächensensors durch die Steuereinheit auf die Pixelelemente in dem Pixelbereich einschränkt ist. Die Bildaufnahmeeinheit erlaubt eine vorteilhafte Umsetzung des erfindungsgemäßen Verfahrens.

In vorteilhafter Weise kann der Pixelbereich auf Basis zumindest einer vollständigen Sensorzeile definierbar sein. Dadurch kann die Bildaufnahmeeinheit als flexibler Zeilensensor (oder als Vielzahl an Zeilensensoren) verwendet werden.

In einer vorteilhaften Ausführungsform kann in die Steuereinheit eine Programmlogik implementiert sein, welche zur Definition des Pixelbereichs, insbesondere auf Basis zumindest einer von der Bildaufnahmeeinheit zuvor erstellten Aufnahme, geeignet ist. Beispielsweise kann anhand einer mit dem Flächensensor (vollflächig) erstellten Aufnahme eine Position mit einem maximalen Kontrast ermittelt, und der Pixelbereich dann auf diese Position ausgerichtet werden. Die Definition kann auf diese Weise entweder vor dem Start einer bestimmten Messaufgabe und/oder in bestimmten regelmäßigen oder unregelmäßigen Intervallen ausgeführt werden.

In einer weiteren vorteilhaften Ausführungsform kann die Steuereinheit eine Schnittstelle zu einem externen Steuergerät aufweisen, über welche Parameter zur Definition des Pixelbereichs von dem externen Steuergerät empfangbar sind. Dies erlaubt eine autonome, eine teilautonome oder eine heteronome Funktionsweise der Bildaufnahmeeinheit. Als "autonom" wird die Funktionsweise bezeichnet, wenn der Pixelbereich gemäß vorbestimmten Parametern von der Steuereinheit der Bildaufnahmeeinheit selbst definiert wird. Als "teilautonom" wird die Funktionsweise bezeichnet, wenn die Steuereinheit von einem externen Steuergerät Parameter empfängt, anhand derer die Position des jeweiligen Pixelbereichs von der Steuereinheit der Bildaufnahmeeinheit errechnet werden. Gegebenenfalls kann die Steuereinheit der Bildaufnahmeeinheit auch heteronom, d.h. direkt abhängig von den empfangenen Parametern betrieben werden, wobei in dem Fall der Pixelbereich ohne weitere Berechnungsschritte auf die von dem externen Steuergerät vorgegebenen Parameter eingestellt wird.

Erfindungsgemäß kann weiters der Pixelbereich als eine zusammenhängende Teilfläche des Flächensensors definierbar sein und/oder der Pixelbereich kann als zwei oder mehr voneinander räumlich getrennte Pixelteilbereiche definierbar sein. Dadurch lassen sich mit einer einzigen Bildaufnahmeeinheit mehrere "Sensoren" definieren, die in unterschiedliche Richtungen ausgerichtet sind, d.h. einen jeweils unterschiedlichen Bildbereich abdecken.

Gemäß einer vorteilhaften Ausgestaltung der Erfindung kann die Definition des Pixelbereichs dynamisch veränderbar sein. Die Bildaufnahmeeinheit kann dadurch beispielsweise auf geänderte Umgebungsbedingungen reagieren.

In vorteilhafter Weise kann die Definition des Pixelbereichs auf die gegebenenfalls bewegte Position zumindest eines Objekts abstimmbar sein. Der Pixelbereich kann dadurch zur Aufnahme der Oberfläche von Objekten verwendet werden. Gegebenenfalls kann der Pixelbereich auch dynamisch verändert werden, um bewegte Objekte zum "Verfolgen".

In einer vorteilhaften Ausführungsform der Erfindung kann die Definition des Pixelbereichs zur Erfassung einer Oberfläche eines gegebenenfalls bewegten Objekts dynamisch veränderbar sein. Dabei kann die Oberfläche stillstehender oder bewegter Objekte von dem jeweiligen, dem Pixelbereich zugeordneten Bildbereich "überstrichen" und dabei eine Aufnahme der Oberfläche des Objekts (gegebenenfalls von unterschiedlichen Blickrichtungen aus) erstellt werden. Diese Aufnahmen können beispielsweise zur Erstellung von "abgewickelten" Oberflächendarstellungen oder von 3d-Darstellung des Objekts verwendet werden.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigen
Fig.1 und 2 jeweils einen Flächensensor einer erfindungsgemäßen Bildaufnahmeeinheit in einer schematischen Darstellung,
Fig. 3 bis 5 zeigt eine schematische Darstellung einer erfindungsgemäßen Bildaufnahmevorrichtung, die zur optischen Überwachung von Objekten angeordnet ist, wobei erfindungsgemäße Verfahren erläutert werden, und
Fig. 6 zeigt eine schematische Darstellung einer erfindungsgemäßen Bildaufnahmeeinheit, die zur Überwachung komplex bewegter Objekte vorgesehen ist.

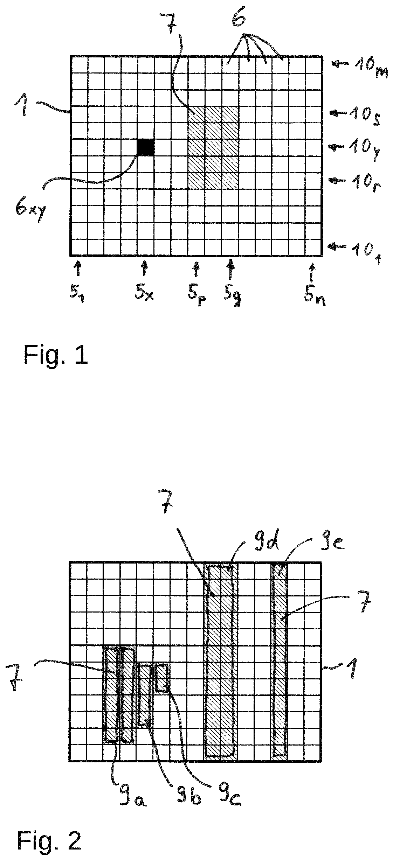

Fig. 1 zeigt eine Draufsicht auf einen Flächensensor 1 einer erfindungsgemäßen Bildaufnahmeeinheit 2 in einer stark schematisierten und vereinfachten Darstellung, die insbesondere zur Erläuterung der hierin verwendeten Bezeichnungen und Bezugszeichen dient. Es ist im Wesentlichen die lichtempfindliche, rechteckige Oberfläche des Flächensensors 1 dargestellt. Auf eine Darstellung der weiteren Bauelemente des Flächensensors 1 wurde aus Gründen der Übersichtlichkeit verzichtet. Der Aufbau und die technische Funktionsweise solcher Sensoren sind dem Fachmann bekannt.

An der lichtempfindlichen Oberfläche des Flächensensors 1 sind eine Vielzahl einzeln auslesbarer Pixelelemente 6 in einem Raster aus Sensorzeilen 5 und Sensorspalten 10 angeordnet. Beispielsweise umfasst der Flächensensor 1 "n" Sensorzeilen 5 und "m" Sensorspalten 10. Die Anzahl n und die Anzahl m kann gemäß üblichen Sensorgrößen oder abgestimmt auf den gegenständlichen Fall frei gewählt werden. Im Industriebereich häufig verwendete Flächensensoren sind beispielsweise im Format 4:3, etwa in den Auflösungen n x m von 640 x 480, 1280 x 960, 1600 x 1200, etc, aber auch in anderen Abmessungen, etwa in den Formaten 1:1, 3:2, 5:4, 6:9 oder anderen, speziellen Formaten mit unterschiedlicher Pixelanzahl, von weniger als einem Megapixel bis hin zu Spezialformaten mit mehreren tausend Megapixel, am Markt verfügbar oder herstellbar.

Jeder einzelnen Sensorzeile 5 lässt sich durch eine Nummer x zwischen 1 und n eindeutig bezeichnen und jede Sensorspalte 10 lässt sich mit eine Nummer y zwischen 1 und m eindeutig bezeichnen. In Fig. 1 ist dies beispielshaft durch die Bezugszeichen der Sensorzeilen 5₁, 5ₚ, 5ₓ, 5_{q} und 5ₙ, sowie den Bezugszeichen der Sensorspalten 10₁, 10ᵣ, 10_{y}, 10ₛ und 10ₘ dargestellt. Demgemäß kann auch jedes Pixelelement 6 mit den Nummern einer bestimmten Sensorzeile 5ₓ und einer bestimmten Sensorspalte 10_{y} eindeutig bezeichnet werden, wie dies beispielsweise in Fig. 1 durch das Sensorelement 6_{xy} dargestellt ist.

Jedes Pixelelement 6 kann entweder einen einzelnen Lichtsensor, oder eine zusammenwirkende Gruppe an Lichtsensoren, beispielsweise für unterschiedliche Spektralbereiche, aufweisen.

Die gegenständliche Erfindung basiert unter anderem auf einer Definition von Bereichen des Flächensensors, wie etwa den in Fig. 1 schraffiert dargestellten rechteckigen Pixelbereich 7. Der Pixelbereich 7 kann eine beliebige Teilauswahl aller Pixelelemente 6_{xy} umfassen wobei die Definition im Falle eines rechteckigen Pixelbereichs 7 beispielsweise durch Angabe einer Anfangs-Sensorzeile 5ₚ, einer End-Sensorzeile 5_{q}, einer Anfangs-Sensorspalte 10ᵣ und einer End-Sensorspalte 10ₛ eindeutig definierbar ist.

Gemäß der gegenständlichen Offenbarung muss ein Pixelbereich 7 nicht zwangsläufig eine rechteckige, zusammenhängende Form aufweisen, sondern er kann sich auch aus einer beliebigen Zusammenstellung von jeweils rechteckigen Pixelteilbereichen 9 zusammensetzen, wie dies unter Bezugnahme auf die Darstellung in Fig. 2 erläutert wird.

Der in Fig. 2 dargestellte Pixelbereich 7 umfasst die drei zusammenhängenden, jeweils rechteckigen Pixelteilbereiche 9a, 9b und 9c, sowie die beiden davon und voneinander getrennten Pixelteilbereiche 9d und 9e. Die beiden letztgenannten Pixelteilbereiche 9d und 9e erstrecken sich jeweils über die gesamte Zeilenlänge, d.h. quer über alle Sensorspalten 10₁ bis 10ₘ.

Die hierin beschriebene Pixelanordnung der Flächensensoren 1 basiert jeweils auf einer "klassischen", schachbrettartig angeordneten Pixelgeometrie, bei der alle Pixelelemente dieselbe Größe aufweisen (etwa im Sinne einer herkömmlichen Bayer-Matrix). Eine solche Anordnung liegt den meisten am Markt erhältlichen Flächensensoren zugrunde, es gibt jedoch auch alternative Layouts, bei denen Pixelelemente unterschiedlicher Größe vorgesehen sein können (z.B. bei der als "X-Trans-Matrix" bezeichneten Anordnung), oder bei denen die Pixelelemente in einer vom Schachbrettmuster abweichenden Form, beispielsweise in Pixel-Fünfergruppen oder diagonal, angeordnet sind. In solchen Fällen ist die Definition des Pixelbereichs 7 entsprechend anzupassen, was im Können eines Durchschnittsfachmanns liegt.

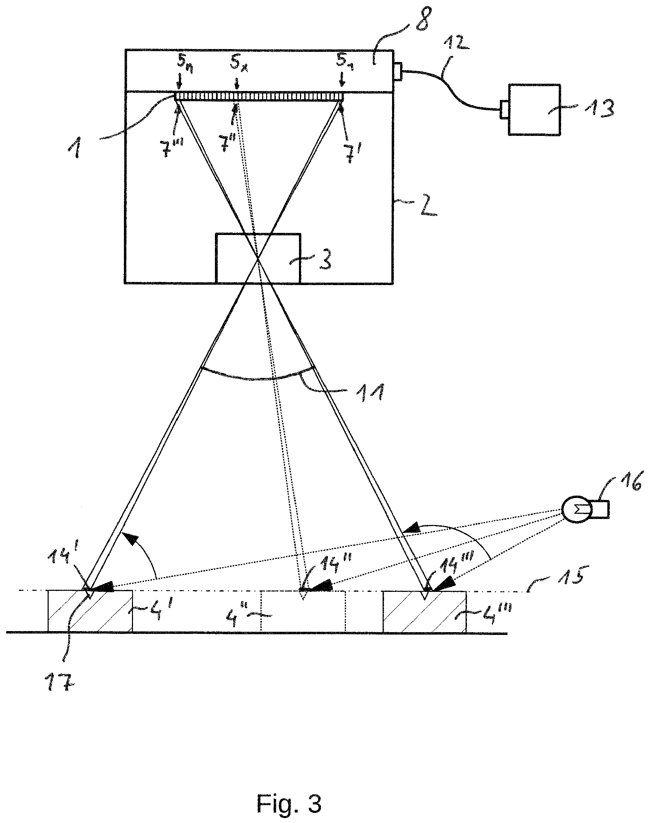

Gemäß der gegenständlichen Offenbarung weist eine beispielsweise in Fig. 3 dargestellte erfindungsgemäße Bildaufnahmeeinheit 2 zumindest einen Flächensensor 1, zumindest eine Optik 3 und eine Steuereinheit 8 auf. Der Flächensensor 1 weist gemäß der zuvor beschriebenen Gestaltung eine Vielzahl an Sensorzeilen 5 auf, wobei jede Sensorzeile 5 eine Vielzahl an vorzugsweise linear angeordneten, einzeln auslesbaren Pixelelementen 6 umfasst. Mit der Optik 3 kann die Bildaufnahmeeinheit 2 auf Objekte 4 fokussiert werden, die sich in einem Aufnahmebereich 11 befinden. Die Fokussierung kann in bekannter Weise durch Verstellen einer in der Optik 3 angeordneten Linsenanordnung und/oder durch Anordnen der Bildaufnahmeeinheit 2 in einer von den aufzunehmenden Objekten 4 entsprechend gewählten Entfernung erfolgen.

Mit der Steuereinheit 8 können die von den Pixelelementen 6 des Flächensensors 1 aufgenommenen Werte ausgelesen werden. In der Darstellung der Fig. 3 ist der Flächensensor 1 direkt an der Steuereinheit 8 angeordnet. Mit der Steuereinheit 8 ist ein zumindest eine Teilfläche des Flächensensors 1 umfassender Pixelbereich 7 definierbar, wobei die Steuereinheit 8 das Auslesen des Flächensensors 1 ausschließlich auf die Pixelelemente 6 in dem Pixelbereich 7 einschränkt. Der Pixelbereich 7 kann dabei insbesondere in den in Zusammenhang mit Fig. 1 und 2 beschriebenen Formen definiert werden, wobei die Definition vorzugsweise einen beliebige Untergruppe aus der Gesamtheit der am Flächensensor 1 vorgesehenen Pixelelemente 6 umfassen kann. Alternativ kann, etwa um die Parametrisierung zu vereinfachen, der definierbare Pixelbereich 7 auf bestimmte Pixelgruppen eingeschränkt sein. Insbesondere kann die Steuereinheit 8 zur Definition des Pixelbereichs 7 auf eine beliebige Auswahl an vollständigen Sensorzeilen 5 zurückgreifen, was die Parametrisierung erleichtert und die Verwendung beispielsweise von Flächensensoren mit zeilenbasierter Auslesung, wie etwa CCD-Sensoren, ermöglicht. Jede Sensorzeile 5 (bzw. jede Gruppe an aneinandergrenzenden Sensorzeilen 5) des Pixelbereichs 7 kann dabei eine Art "Linearsensor" darstellen, der in einer definierten Richtung auf den Aufnahmebereich 11 ausgerichtet ist. Alternativ lässt sich die mögliche Definition des Pixelbereichs 7 auch auf Teilabschnitte der Sensorzeile eingrenzen, etwa auf eine "obere" oder "untere" Hälfte einer Sensorzeile 5, oder ähnliches.

Indem die Steuereinheit 8 nicht die Gesamtheit aller Pixelelemente 6 des Flächensensors 1 auslesen muss, sondern lediglich die Pixelelemente 6 innerhalb der Pixelbereiche 7 verarbeitet, lässt sich die Menge an zu bearbeitenden und gegebenenfalls weiterzuleitenden Daten erheblich reduzieren, was beispielsweise für eine Erhöhung der Aufnahmefrequenz genutzt werden kann.

Der Pixelbereich 7 kann dabei entweder direkt von der in der Bildaufnahmeeinheit 2 vorgesehenen Steuereinheit 8 auf Basis definierter Algorithmen festgelegt werden, oder er kann auf Parametern basieren, die über eine Schnittstelle 12 von einem externen Steuergerät 13 übermittelt werden. Die Schnittstelle 12 kann beispielsweise ein industrielles Bussystem umfassen. Das Steuergerät kann beispielsweise ein mit einer entsprechenden Software programmierter Computer oder eine Speicherprogrammierbare Steuerung (SPS) oder eine andere Automatisierungskomponente sein. Über die Schnittstelle 12 lässt sich die Bildaufnahmeeinheit 2 in industrielle Anwendungen integrieren. Gegebenenfalls kann die Schnittstelle 12 über das Bussystem kommunizieren, das von der Automatisierungskomponente auch für die Steuerung anderer Anlagenteile verwendet wird.

Der Pixelbereich 7 kann entweder für eine bestimmte Anwendung unveränderlich definiert sein, er kann aber auch dynamisch, d.h. innerhalb einer bestimmten Messaufgabe, verändert werden, wodurch sich zahlreiche vorteilhafte Verfahren ausführen lassen, die im Folgenden beschrieben werden.

In Fig. 3 sind drei Pixelbereiche 7 beispielhaft dargestellt, die zur Unterscheidung mit entsprechenden Oberstrichen als Pixelbereiche 7', 7" und 7"' gekennzeichnet sind. Jeder Pixelbereich 7', 7", 7"' umfasst in diesem Fall alle Pixelelemente 6 einer Sensorzeile 5, insbesondere umfasst der erste Pixelbereich 7' die Pixelelemente 6 der ersten Sensorzeile 5₁, der dritte Pixelbereich 7"' umfasst die Pixelelemente der letzten Sensorzeile 5ₙ und der zweite Pixelbereich 7" umfasst die Pixelelemente 6 einer dazwischenliegenden Sensorzeile 5ₓ. Durch die Abmessungen des Flächensensors 1 einerseits und die Abmessungen, Eigenschaften und relative Ausrichtung der Optik 3 andererseits ist der Aufnahmebereich 11 für die Bildaufnahmeeinheit 2 definiert, wobei die Optik 3 auf eine bestimmte Messebene 15 fokussiert ist und in dieser Messebene 15 einen im wesentlichen rechteckigen Messbereich definiert. Mit einer entsprechenden Schärfentiefe können gegebenenfalls auch Bereiche ausreichend genau detektiert werden, die oberhalb der Messebene 15 (d.h. näher zur Optik 3) und unterhalb der Messebene 15 angeordnet sind. Jeder Pixelbereich 7', 7", 7"' definiert in der Messebene 15 einen entsprechenden Bildbereich 14', 14", 14"', der von den Pixelelementen 6 in dem jeweiligen Pixelbereich 7', 7", 7"' aufgenommen wird. Insbesondere randnahe Bildbereiche 14, wie etwa die beiden äußersten Bildbereiche 14' und 14"' können aufgrund von Abbildungsfehlern, insbesondere der Verzeichnung der Optik 3 einer Verzerrung unterworfen sein, die gegebenenfalls von der Steuereinheit 8 (bzw. dem externen Steuergerät 13) berücksichtigt und/oder herausgerechnet werden kann.

Im in Fig. 3 dargestellten Fall definieren die (linearen) Pixelbereiche 7', 7", 7"' jeweils einen Linearsensor, wobei die Bildbereiche 14', 14", 14"' dieser Linearsensoren jeweils unter einem unterschiedlichen Winkel auf die Messebene 15 ausgerichtet sind. Dies ist insbesondere in Zusammenhang mit einer Beleuchtung der Messebene 15 relevant. In Fig. 3 ist eine Beleuchtungseinheit 16 beispielhaft dargestellt, die in der Art einer Dunkelfeldbeleuchtung die Messebene 15 unter einem flachen Winkel beleuchtet. Die Beleuchtungseinrichtung 16 kann gegebenenfalls mit der Aufnahmefrequenz der Bildaufnahmeeinheit 2 synchronisiert sein. Durch den flachen Einstrahlungswinkel weisen Merkmale auf einem Objekt 4, also beispielsweise eine Kerbe 17 oder ein Kratzer an deren Oberfläche, je nach Position des Bildbereichs 14', 14", 14"' bei einer Beleuchtung durch die Beleuchtungseinheit 16 jeweils ein unterschiedliches Reflexionsverhalten auf. Daher wird die Kerbe 17 von der Bildaufnahmeeinheit 2 mit einem unterschiedlichen Kontrast aufgenommen, je nachdem an welcher Position sich das Objekt 4 befindet.

Für viele Anwendungen ist es notwendig, diesen Kontrast zu maximieren, wobei dies erfindungsgemäß beispielsweise dadurch erfolgen kann, dass zuerst eine Referenzmessung mit dem gesamten Flächensensor 1 durchgeführt wird, während ein Referenzobjekt mit bekannten Merkmalen (also etwa die in Fig. 3 dargestellte Kerbe 17) in der Messebene 15 angeordnet ist oder durch dieses hindurchbewegt wird. Durch eine Auswertung dieser Referenzmessung kann die Position, die einen maximalen Kontrast verspricht, ermittelt und der Pixelbereich dementsprechend eingestellt werden. Diese Auswertung kann entweder von der Bildaufnahmeeinheit 2 autonom oder unter Steuerung durch das externe Steuergerät 12 durchgeführt werden. Eine analoge Vorgehensweise kann auch bei Hellfeldbeleuchtungen oder bei Durchlichtaufnahmen vorteilhaft angewendet werden. Beispielsweise könnte anstelle der flachen Dunkelfeldbeleuchtung durch die Beleuchtungseinheit 16 eine (LED-)Ringlampe verwendet werden, die um die Optik 3 herum angeordnet ist und die Messfläche 15 von der Bildaufnahmeeinheit 2 her beleuchtet.

Wenn die Position des Objektes 4 der Bildaufnahmeeinheit 2 (bzw. dem externen Steuergerät 13) bekannt ist, ist es auch möglich, bestimmte Merkmale auf dem Objekt 4 mit einem bewegten Bildbereich 14 zu "verfolgen", indem der entsprechende Pixelbereich 7 auf dem Flächensensor 1 dynamisch verändert wird, während sich das Objekt 4 durch den Aufnahmebereich 11 bewegt. (Dies ist in Fig. 3 durch die als 4', 4" und 4" bezeichneten Positionen des Objekts 4 dargestellt). Auf diese Weise lassen sich von einem einzigen Bereich mehrere Aufnahmen unter unterschiedlichen Beleuchtungssituationen erzielen. Dieses Verfahren kann auch verwendet werden, um mit einem Referenzobjekt mit einer bekannten Oberflächenabweichung (etwa wie die in Fig. 3 dargestellte Kerbe 17) durch den Aufnahmeberiech 11 bewegt und die Oberflächenabweichung mit dem Bildbereich 14 verfolgt wird. Dadurch lässt sich eine Position für den Pixelbereich 7 ermitteln, die für die weitere Messung einen maximalen Kontrast verspricht.

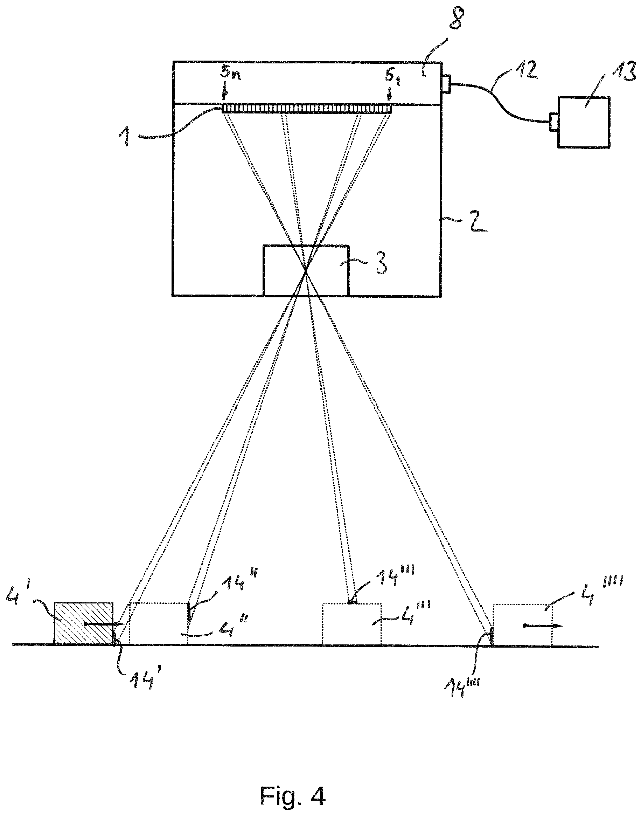

Neben der oben beschriebenen Ermittlung einer optimalen Messposition können von der erfindungsgemäßen Bildaufnahmeeinheit 2 auch komplexere Verfahren ausgeführt werden. Beispielsweise ist es möglich, die mit der (feststehenden) Bildaufnahmeeinheit 2 erzeugbaren unterschiedlichen Aufnahmerichtungen zu verwenden, um Oberflächen von bewegten Objekten zu scannen, wie dies unter Bezugnahme auf Fig. 4 erläutert wird. Ein Objekt 4 bewegt sich dabei beispielsweise linear und mit bekannter Geschwindigkeit durch den Aufnahmebereich 11, wobei aufeinanderfolgende Positionen des Objekts 4 in Fig. 4 mit den Bezugszeichen 4', 4", 4"' und 4"" gekennzeichnet sind. Bei der ersten Position (Objekt 4') tritt das Objekt in den Aufnahmebereich 11 ein. Der Pixelbereich 7 wird zu diesem Zeitpunkt von dem externen Steuergerät 13 bzw. von der Steuereinheit 8 in Form eines Zeilensensors auf die erste Sensorzeile 5₁ eingestellt. Während sich das Objekt durch den Aufnahmebereich 11 bewegt, wird auch der Pixelbereich 7 so verändert, dass der entsprechende Bildbereich 14 sind zwar mit dem Objekt 4 mitbewegt, allerdings mit einer geringeren Geschwindigkeit als das Objekt 4. Der Pixelbereich 7 wird dabei über die gesamte Aufnahmedauer dynamisch so verändert, dass der letzte Bildbereich 14"" das rückwärtige Ende des Objekts 4"" zu dem Zeitpunkt erfasst, an dem das Objekt 4 den Aufnahmebereich 11 verlässt.

Aufgrund der Relativbewegung zwischen dem Bildbereich 14 und dem Objekt 4 können die einzelnen Aufnahmen, die in den jeweiligen aufeinanderfolgenden Pixelbereichen 7 erfasst wurden, zu einer Gesamtaufnahme der Oberfläche des Objekts zusammengesetzt werden. Dabei ist zu beachten, dass auch die Vorderseite und Rückseite aufgrund des Aufnahmewinkels vollständig abgebildet werden können, was mit einer Momentaufnahme nicht möglich ist. Beispielsweise bei einer gleichförmigen Bewegung von Objekt 4 und Pixelbereich 7 wäre zwar die Aufnahme der Vorder- und Rückseite verzerrt gegenüber der Aufnahme der ebenen Oberfläche, diese Verzerrung lässt sich jedoch durch bekannte arithmetische Verfahren ermitteln und gegebenenfalls aus einer Gesamtdarstellung der Aufnahme herausrechnen.

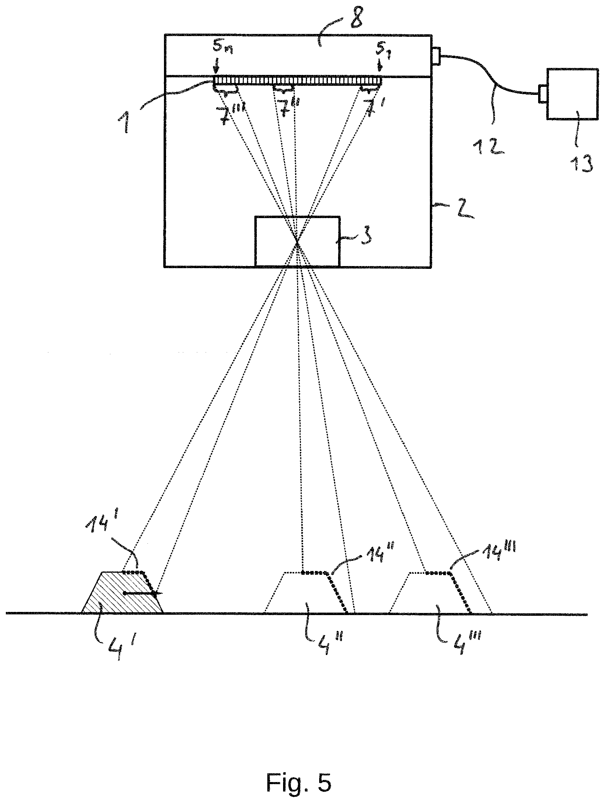

Ein weiteres Beispiel für ein mit der erfindungsgemäßen Bildaufnahmeeinheit 2 ausführbares Verfahren ist in Fig. 5 schematisch dargestellt. Dabei wird wiederum der Pixelbereich 7 (dargestellt in den Positionen 7', 7", 7"') dynamisch auf ein Objekt 4 (Positionen 4', 4", 4"') ausgerichtet, während sich dieses durch den Aufnahmebereich 11 hindurchbewegt. Im Unterschied zum vorher beschriebenen Beispiel umfasst jedoch der Pixelbereich 7', 7", 7"' immer mehrerer Sensorzeilen 5, sodass mit jeder Einzelaufnahme eine Bildmatrix erzeugt wird. Weiters ist die Geschwindigkeit, mit der der Pixelbereich 7 bewegt wird, so auf die Geschwindigkeit des Objekts 4 abgestimmt, dass immer derselbe Teil des Objekts 4 (in dem Fall die vordere, obere Kante) im Wesentlichen in der Mitte des entsprechenden Bildbereichs 14', 13", 14"' liegt. Da somit derselbe Bereich des Objekts 4 unter unterschiedlichen Blickrichtungen aufgenommen wurde, lässt sich durch Vergleich der Aufnahmen ein 3d-Modell des überwachten Bereichs oder des ganzen Objekts 4 erstellen, ohne dass die Bildaufnahmeeinheit 2 dazu bewegt bzw. verschwenkt werden müsste.

Die den Darstellungen der Fig. 3 bis 5 zugrundeliegende geradlinige und konstante Bewegung der Objekte 4 dient insbesondere der besseren Verständlichkeit und Vereinfachung der Beschreibung. Es ist klar, dass die erfindungsgemäßen Verfahren und Vorrichtungen auch für komplexe Bewegungen in einer oder mehreren translatorischen oder rotatorischen Achsen angewendet werden können.

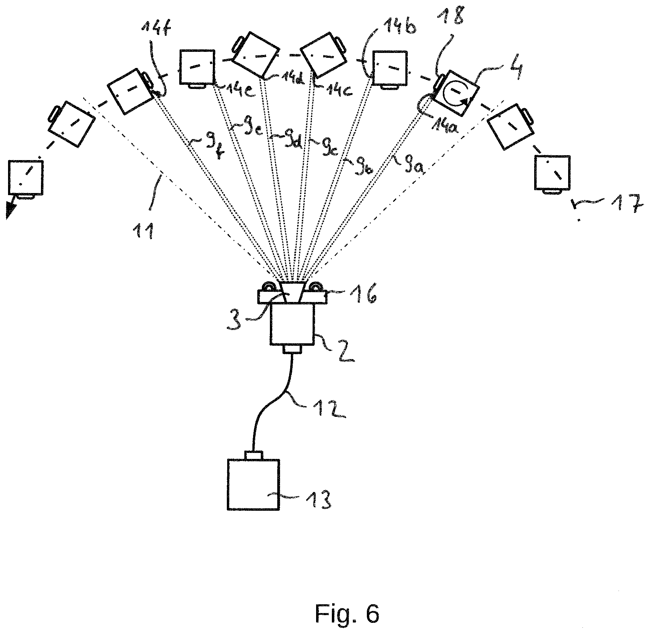

Fig. 6 zeigt ein weiteres Beispiel eines vorteilhaften erfindungsgemäßen Verfahrens, das mit der Bildaufnahmeeinheit 2 ausführbar ist. Dabei sollen mit der Bildaufnahmeeinheit 2 die Oberflächen von Objekten 4 gescannt werden, beispielsweise um Produkt- oder Produktionsfehler, Kratzer, Beschädigungen oder ähnliches zu erkennen. Im Stand der Technik wird dazu üblicherweise so vorgegangen, dass jedes einzelne Objekt 4 in einer definierten Position vor einem Linearscanner angehalten und in dieser Position das Objekt 4 um seine Achse rotieren gelassen wird, sodass der Linearscanner den gesamten Umfang des Objekts 4 mit dem Linearscanner scannen kann. Dieses Verfahren stellt nicht nur für die Transportvorrichtung und die Steuerung eine Herausforderung dar, sondern ist auch sehr langsam und unflexibel, da eine Umstellung auf andersförmige Objekte im Allgemeinen eine Umgestaltung zumindest der gesamten Messanordnung erfordert, wobei zusätzlich die Beleuchtung spezifisch angepasst werden muss.

Um diesen Aufwand zu verringern ist die in Fig. 6 dargestellte Bildaufnahmeeinheit 2 mit ihrem Aufnahmebereich 11 auf einen Teil einer Transport- oder Bewegungsstrecke ausgerichtet, durch welche eine Vielzahl an Objekten 4 transportiert werden, bzw. sich auf andere Weise durch den Aufnahmebereich 11 bewegen. Im dargestellten Fall bewegen sich die Objekte 4 entlang einer gekrümmten Bahnkurve 17 wobei sie sich zusätzlich um eine normal auf die Bildebene stehende Achse rotieren. Die Bahnkurve kann beispielsweise durch ein Förderband in einer Produktions-, Befüllungs- oder Verpackungsanlage sein und die Objekte können beispielsweise Halb- oder Fertigerzeugnisse, Verpackungsbehälter, wie etwa Flaschen, Kisten, Beutelverpackungen, Pakete oder ähnliches sein. Jedes Objekt 4 kann beispielsweise ein Referenzmerkmal 18 aufweisen, wobei das Referenzmerkmal 18 beispielsweise ein Etikett, eine beispielsweise als Relief ausgebildete Handelsmarke oder ein anderes auf jedem Objekt 4 vorhandenes Produkt- oder Verpackungsmerkmal sein kann. Das Referenzmerkmal 18 ist nicht zwingend erforderlich, kann aber die Regelung erleichtern.

Der Aufnahmebereich 11 kann mit einer zum jeweiligen Fall passenden, beliebigen Art von Hell- oder Dunkelfeldbeleuchtung ausgeleuchtet werden, wobei in Fig. 6 als Beleuchtungsvorrichtung 16 eine LED-Ringlampe vorgesehen ist, die um das Objektiv bzw. die Optik 3 der Bildaufnahmeeinheit 2 herum angeordnet ist und den gesamten Aufnahmebereich 11 ausleuchtet.

Die Bewegung der Objekte entlang der Bahnkurve 17 kann gegebenenfalls von dem zentralen Steuergerät 13 (beispielsweise eine SPS oder eine andere Automatisierungseinheit) überwacht und/oder gesteuert werden, welches auch die Bildaufnahmeeinheit 2 ansteuert, es können jedoch auch andere Regelungs- bzw. Steuerungsstrukturen vorgesehen sein. Im dargestellten Fall übermittelt das zentrale Steuergerät 13 über die Schnittstelle 12 Parameter an die Bildaufnahmeeinheit 2. Die Bildaufnahmeeinheit 2 legt auf Basis dieser Parameter einen entsprechenden Pixelbereich 7 dynamisch fest, liest die von den jeweiligen Pixelelementen 6 in dem Pixelbereich 7 ermittelten Messwerte gemäß den Parametern aus und übermittelt die entsprechenden Sensordaten zurück an das zentrale Steuergerät 13. Die Übermittlung kann vorzugsweise über dieselbe Schnittstelle 12 oder auch auf einem anderen Weg übermittelt werden.

Der Pixelbereich 7 umfasst gleichzeitig jeweils mehrere Pixelteilbereiche 9a - 9f, wobei jeder Pixelteilbereich 9a - 9f einem bestimmten Objekt 4 zugeordnet ist. Der Pixelbereich 7 wird im Wesentlichen in Echtzeit so verändert, dass jeder Pixelteilbereich 9a - 9f (bzw. der von diesem Pixelteilbereich 9a - 9f erzeugte Messbereich 14a-14f) auf das ihm zugeordnete Objekt 4 ausgerichtet ist, und zwar von dem Zeitpunkt, wo das Objekt 4 in den Aufnahmebereich 11 eintritt, bis zu dem Zeitpunkt, wo das Objekt 4 den Aufnahmebereich 11 verlässt. Gegebenenfalls können die Objekte 4 auch nur in einem kleineren Teilintervall des Aufnahmebereichs 11 gescannt werden. Jeder Pixelteilbereich 9a - 9f kann beispielsweise als Linearsensor ausgebildet sein und eine oder mehrere aneinandergrenzende Sensorzeilen 5 des Flächensensors 1 der Bildaufnahmeeinheit 2 umfassen, etwa wie dies in Zusammenhang mit den zuvor beschriebenen Ausführungsformen bereits beschrieben wurde.

Da jedes Objekt 4 neben der translatorischen Bewegung entlang der Bahnkurve 17 auch eine Rotation um eine eigene Achse vollzieht, ist es durch eine entsprechend schnelle und genaue Einstellung der Pixelteilbereichen 9a-9f möglich, die Außenoberfläche jedes Objekts 4 im Wesentlichen vollständig aufzunehmen, während es innerhalb des Aufnahmebereichs 11 rotiert. Das Referenzmerkmal 18 kann verwendet werden, um eine Ausrichtung des Objekts 4 zu erkennen, oder um Referenzmessungen zu erzeugen, mit denen beispielsweise die Beleuchtung und die exakte Ausrichtung der Messbereiche 14 optimiert werden kann. Bei im Wesentlichen zylindrischen Objekten ist es beispielsweise möglich, den Messbereich 14 stets so auf das sich bewegende Objekt 4 auszurichten, dass die Messung der gesamten zylindrischen Oberfläche im Wesentlichen unter einem konstanten Oberflächenwinkel erfolgt.

Gegebenenfalls kann die Bildaufnahmeeinheit 2 zusätzlich zu dem gemäß dem obigen Schema dynamisch veränderten Pixelbereich 7 in bestimmten Intervallen ergänzend vollständige Aufnahmen des gesamten Aufnahmebereichs 11 erstellen, etwa um die Ausrichtung der Messbereiche 14 zu optimieren oder um ergänzende Messdaten zu erzeugen. Beispielsweise ist es auch möglich, den gesamten Aufnahmebereich 11 nach dem Starten der Anlage oder in regelmäßigen Intervallen zu "filmen" (wobei gegebenenfalls die Aufnahmefrequenz entsprechend verringert werden kann, oder nur eine Teilauswahl von über den Flächensensor 1 verteilten Pixelelementen 6 - beispielsweise in einem Raster, das jedes fünfte Pixelelement auswählt - genutzt werden können, um die Datenmengen zu verringern). Mithilfe einer Auswertung dieser Filmaufnahme kann dann eine optimale Strategie für die Steuerung der Messbereiche 14 erstellt und umgesetzt werden.

Wie dies oben beschrieben wurde, kann in allen Ausführungsformen die Definition der jeweiligen statischen oder dynamischen Pixelbereiche 7 entweder durch die Steuereinheit 8 der Bildaufnahmeeinheit 2 oder durch ein zentrales Steuergerät oder mittels verteilter Rollen erfolgen. Das zentrale Steuergerät kann die Definition der Pixelbereiche 7 und andere Funktionen der Bildaufnahmeeinheit 2 beispielsweise durch Übermittlung von Parametern steuern. Zu Beispielen solcher Parametern zählen unter anderem Parameter, die eine direkte Definition des Pixelbereichs 7 enthalten (also Anzahl, Form und Größe der Pixelteilbereiche), Parameter, die der Steuereinheit 8 ermöglichen, einen Pixelbereich 7 zu ermitteln, also beispielsweise ein Positionsangabe eines Bereichs, auf den ein Bildbereich 14 zu richten ist, Parameter, die eine Aufnahmefrequenz definieren, Parameter, die eine Belichtungsdauer definieren, Parameter, die eine Fokussierung betreffen, Parameter die eine Aufnahmedauer bei einer bestimmten Pixelbereich-Konfiguration definieren und Parameter, die die Erstellung der Ausgabedaten betreffen (z.B. Erstellen einer Abbildung der "abgerollten" eines Objekts 4 auf Basis der Aufnahmen eines bewegten Pixelteilbereichs, Erstellen eines 3d-Modells eines Objekts, etc.).

Die erfindungsgemäße Bildaufnahmeeinheit 2 kann auch in anderen Bereichen vorteilhaft eingesetzt werden, etwa zur Überwachung beliebiger Objekte, wobei die Funktionalität der Definition von Pixelbereichen 7 auf beliebige Weise mit den Aufnahmefähigkeiten des gesamten Flächensensors kombiniert werden können. Beispielsweise ist es möglich, einen Aufnahmebereich 11 (gegebenenfalls mit einer geringen Aufnahmefrequenz oder mit nur wenigen, über den Flächensensor 1 verteilten Pixel) laufend zu filmen, und beispielsweise durch Ermittlung von Differenzbildern Bewegungen zu erkennen. Bei Erkennung bestimmter Bewegungsmuster kann dann eine bestimmte Abfolge an Aufnahmen mit statischen oder dynamischen Pixelbereichen 7 ausgelöst werden.

Alle beschriebenen Ausführungsformen der Bildaufnahmeeinheit und die offenbarten Verfahrensschritte können in einer beliebigen sinnvollen Form miteinander kombiniert werden. Insbesondere ist es gemäß der Erfindung beabsichtigt, Merkmale, die im Zusammenhang mit einer bestimmten Ausführungsform beschrieben wurden, mit den anderen Ausführungsformen in beliebiger Weise zu kombinieren, außer wenn in der entsprechenden Textstelle explizit darauf hingewiesen wird, dass eine solche Kombination nicht vorgesehen ist, oder wenn eine solche Kombination aus technischen Gründen offensichtlich unmöglich ist.

Die in der Beschreibung und den Ansprüchen offenbarten Verfahrensschritte können in einer von der Steuereinheit 8 der Bildaufnahmeeinheit 2 und/oder von dem externen Steuergerät 13 ausführbaren Programmlogik definiert sein, wobei die von der Steuereinheit 8 bzw. dem externen Steuergerät 13 ausgeführte Programmlogik die Steuereinheit 8 bzw. das externe Steuergerät 13 zur Ausführung der entsprechenden Verfahrensschritte befähigt.

### Bezugszeichen:

Flächensensor 1
Bildaufnahmeeinheit 2
Optik 3
Objekte 4
Sensorzeilen 5
Pixelelemente 6
Pixelbereich 7
Steuereinheit 8
Pixelteilbereiche 9
Sensorspalten 10
Aufnahmebereich 11
Schnittstelle 12
Steuergerät 13
Bildbereich 14
Messebene 15
Beleuchtungseinheit 16
Bahnkurve 17
Referenzmerkmal 18

## Patentansprüche

1. Verfahren zum Auslesen eines Flächensensors (1) in einer Bildaufnahmeeinheit (2), wobei die Bildaufnahmeeinheit (2) eine Optik (3) aufweist, mit welcher die Bildaufnahmeeinheit (2) auf Objekte (4) fokussierbar ist, wobei der Flächensensor (1) eine Vielzahl an Sensorzeilen (5) aufweist und wobei jede Sensorzeile (5) eine Vielzahl an vorzugsweise linear angeordneten, vorzugsweise einzeln auslesbaren Pixelelementen (6) umfasst, **dadurch gekennzeichnet, dass** ein Pixelbereich (7) definiert wird, wobei der Pixelbereich (7) zumindest einen Teilabschnitt einer Sensorzeile (5) umfasst und wobei das Auslesen des Flächensensors (1) auf die Pixelelemente (6) in dem Pixelbereich (7) eingeschränkt wird.

2. Verfahren nach Anspruch 1, **dadurch gekennzeichnet, dass** der Pixelbereich (7) zumindest eine Sensorzeile (5) vollständig umfasst.

3. Verfahren nach Anspruch 1 oder 2, **dadurch gekennzeichnet, dass** die Definition des Pixelbereichs (7) auf Basis zumindest einer von der Bildaufnahmeeinheit (2) zuvor erstellten Aufnahme definiert wird.

4. Verfahren nach einem der Ansprüche 1 bis 3, **dadurch gekennzeichnet, dass** die Definition des Pixelbereichs (7) auf Basis einer vorgegebenen Parametrisierung erfolgt.

5. Verfahren nach einem der Ansprüche 1 bis 4, **dadurch gekennzeichnet, dass** der Pixelbereich (7) eine zusammenhängende Teilfläche des Flächensensors (1) umfasst, oder dass der Pixelbereich (7) zwei oder mehr gegebenenfalls voneinander räumlich getrennte Pixelteilbereiche (9a-9e) aufweist.

6. Verfahren nach einem der Ansprüche 1 bis 5, **dadurch gekennzeichnet, dass** die Definition des Pixelbereichs (7) auf die gegebenenfalls bewegte Position zumindest eines Objekts (4) abgestimmt wird.

7. Verfahren nach einem der Ansprüche 1 bis 6, **dadurch gekennzeichnet, dass** die Definition des Pixelbereichs (7) dynamisch verändert wird.

8. Verfahren nach Anspruch 7, **dadurch gekennzeichnet, dass** die Definition des Pixelbereichs (7) zur Erfassung einer Oberfläche eines gegebenenfalls bewegten Objekts (4) dynamisch verändert wird.

9. Bildaufnahmeeinheit (2) mit zumindest einem Flächensensor (1), wobei der Flächensensor (1) eine Vielzahl an Sensorzeilen (5) aufweist und wobei jede Sensorzeile (5) eine Vielzahl an vorzugsweise linear angeordneten, vorzugsweise einzeln auslesbaren Pixelelementen (6) umfasst, einer Optik (3), mit welcher die Bildaufnahmeeinheit (2) auf Objekte (4) fokussierbar ist, und eine Steuereinheit (8), über welche die von den Pixelelementen (6) des Flächensensors (1) aufgenommenen Werte ausgelesen werden, **dadurch gekennzeichnet, dass** mit der Steuereinheit (8) ein zumindest eine Teilfläche des Flächensensors (1) umfassender Pixelbereich (7) definierbar ist, wobei der Pixelbereich (7) zumindest einen Teilabschnitt einer Sensorzeile (5) umfasst, und wobei das Auslesen des Flächensensors (1) durch die Steuereinheit (8) auf die Pixelelemente (6) in dem Pixelbereich (7) einschränkt ist.

10. Bildaufnahmeeinheit (2) nach Anspruch 9, **dadurch gekennzeichnet, dass** der Pixelbereich (7) auf Basis zumindest einer vollständigen Sensorzeile (5) definierbar ist.

11. Bildaufnahmeeinheit (2) nach Anspruch 9 oder 10, **dadurch gekennzeichnet, dass** in die Steuereinheit (8) eine Programmlogik implementiert ist, welche zur Definition des Pixelbereichs (7), insbesondere auf Basis zumindest einer von der Bildaufnahmeeinheit (2) zuvor erstellten Aufnahme, geeignet ist.

12. Bildaufnahmeeinheit (2) nach einem der Ansprüche 9 bis 11, **dadurch gekennzeichnet, dass** die Steuereinheit (8) eine Schnittstelle (12) zu einem externen Steuergerät (13) aufweist, über welche Parameter zur Definition des Pixelbereichs (7) von dem externen Steuergerät empfangbar sind.

13. Bildaufnahmeeinheit (2) nach einem der Ansprüche 9 bis 12, **dadurch gekennzeichnet, dass** der Pixelbereich (7) als eine zusammenhängende Teilfläche des Flächensensors definierbar ist, und/oder dass der Pixelbereich (7) als zwei oder mehr voneinander räumlich getrennte Pixelteilbereiche (9a, 9b) definierbar ist.

14. Bildaufnahmeeinheit (2) nach einem der Ansprüche 9 bis 13, **dadurch gekennzeichnet, dass** die Definition des Pixelbereichs (7) dynamisch veränderbar ist.

15. Bildaufnahmeeinheit (2) nach einem der Ansprüche 9 bis 14, **dadurch gekennzeichnet, dass** die Definition des Pixelbereichs (7) auf die gegebenenfalls bewegte Position zumindest eines Objekts (4) abstimmbar ist.

16. Bildaufnahmeeinheit (2) nach einem der Ansprüche 9 bis 15, **dadurch gekennzeichnet, dass** die Definition des Pixelbereichs (7) zur Erfassung einer Oberfläche eines gegebenenfalls bewegten Objekts (4) dynamisch veränderbar ist.
